# EUROPÄISCHE PATENTSCHRIFT

(11) **EP 0 593 687 B1**
(45) Veröffentlichungstag und Bekanntmachung des Hinweises auf die Patenterteilung: **14.05.1997**
(21) Anmeldenummer: 92923432.6
(22) Anmeldetag: 23.11.1992
(51) Int. Cl.: C02F 1/04, B01D 5/00, B01D 1/22, B01D 1/26, B01D 1/30

(54) **VERFAHREN UND EINRICHTUNG FÜR MEERWASSERENTSALZUNG MIT EINEM PLATTENWÄRMETAUSCHER**
PROCESS AND DEVICE FOR THE DESALINATION OF SEA WATER USING A PLATE TYPE HEAT EXCHANGER
PROCEDE ET DISPOSITIF DE DESSALEMENT DE L'EAU DE MER AVEC UN ECHANGEUR DE CHALEUR A PLAQUES

(30) Priorität: 23.11.1991 CH 3419/91
(43) Veröffentlichungstag der Anmeldung: 27.04.1994
(73) Patentinhaber: GEYSIR AG, CH-4025 Basel (CH)
(72) Erfinder: DOROSZLAI, Pal, G., K., CH-8038 Zürich (CH)
(74) Vertreter: Schick, Carl
(86) Internationale Anmeldenummer: CH9200230
(87) Internationale Veröffentlichungsnummer: WO9310048

(56) Entgegenhaltungen:
- EP-A- 0 034 920
- CH-A- 645 601
- US-A- 4 536 257

## Beschreibung

Die vorliegende Erfindung betrifft eine Einrichtung zur Erzeugung von reinem Wasser, insbesondere Meerwasser, durch mehrfache Destillation mit Plattenwärmetauscher-Platten gemäss dem Oberbegriff des Patentanspruchs 1.

Aus der CH-645 601 ist eine Anlage zum Entsalzen von Meerwasser mit mehreren hintereinander geschalteten Verdampfungseinrichtungen bekannt. Eine solche Verdampfungseinrichtung weist eine ringförmige Kammer auf, die oben offen ist und über einen durch einen Deckel begrenzten Raum mit einer weiteren Kammer in Verbindug steht. Im oberen Bereich und innerhalb dieser ringförmigen Kammer ist ein Wärmetauscher in der Form einer Kühlschlange angeordnet. Einige Kammern sind mit Trennwänden versehen, die unterschiedliche Höhen aufweisen, derart, dass das Meerwasser beispielsweise bei der einen Trennwand in einer Höhe h und bei der anderen Trennwand in einer Höhe h' überströmt, wobei die Höhe h' grösser als die Höhe h ist.

Derartige thermische Verfahren, welche durch Verdampfung und Kondensation, oder Mehrfachdestillation, die Reinigung von salzhaltigem oder unreiner Wasser ermöglichen, arbeiten dann besonders wirtschaftlich, wenn die zur Verdampfung verwendete Wärme nach der Kondensation wiederholt zur Verdampfung genutzt wird.

Verfahren, welche auf dieser Grundlage bei niedrigem Druck oder im Vakuum arbeiten, benötigen wegen des grossen spezifischen Volumens voluminöse Apparaturen. Da diese aus nichtrostenden Materialien bestehen müssen, sind sie entsprechend teuer. Der Zusammenbau bedingt viel Schweissen von Hand und ist ebenfalls teuer.

In der chemischen Industrie sind auch Plattenwärmetauscher aus nichtrostenden Materialien bekannt, die ebenfalls für Kondensation und Verdampfung eingesetzt werden. Solche Apparate umfassen eine Reihe auf einfache Art montierbarem Platten, die in grossen Mengen hergestellt werden und daher besonders kostengünstig sind.

Es ist nun Aufgabe der Erfindung, eine verbesserte Einrichtung zur Gewinnung von reinem Wasser durch Destillation zu schaffen.

Diese Aufgabe wird erfindungsgemäss durch eine Einrichtung mit den im kennzeichnenden Teil des Patentanspruchs 1 angegebenen Merkmalen gelöst.

Weitere vorteilhafte Ausführungen der Erfindung sind in den abhängigen Ansprüchen angegeben.

Die Erfindung wird nachfolgend beispielsweise an Hand einer Zeichnung näher erläutert. Es zeigt:
- Fig. 1: mehrere durch ein Rohrsystem verbundene Plattenwärmetauscher-Einheiten nach der Erfindung,
- Fig. 2: die innere Schaltung einer solchen Einheit,
- Fig. 3: eine Darstellung zur Erläuterung der Vorgänge innerhalb eines Effektes,
- Fig. 4: einen Querschnitt durch die kondensationsseitigen Verbindungsöffnungen des vertikal gestellten Plattenwärmetauschers,
- Fig. 5: einen Querschnitt durch die verdampferseitigen Verbindungsöffnungen dieses Plattenwärmetauschers, und
- Fig. 6: einen Schnitt parallel zu den Platten an der Verdampferseite eines Effekts.

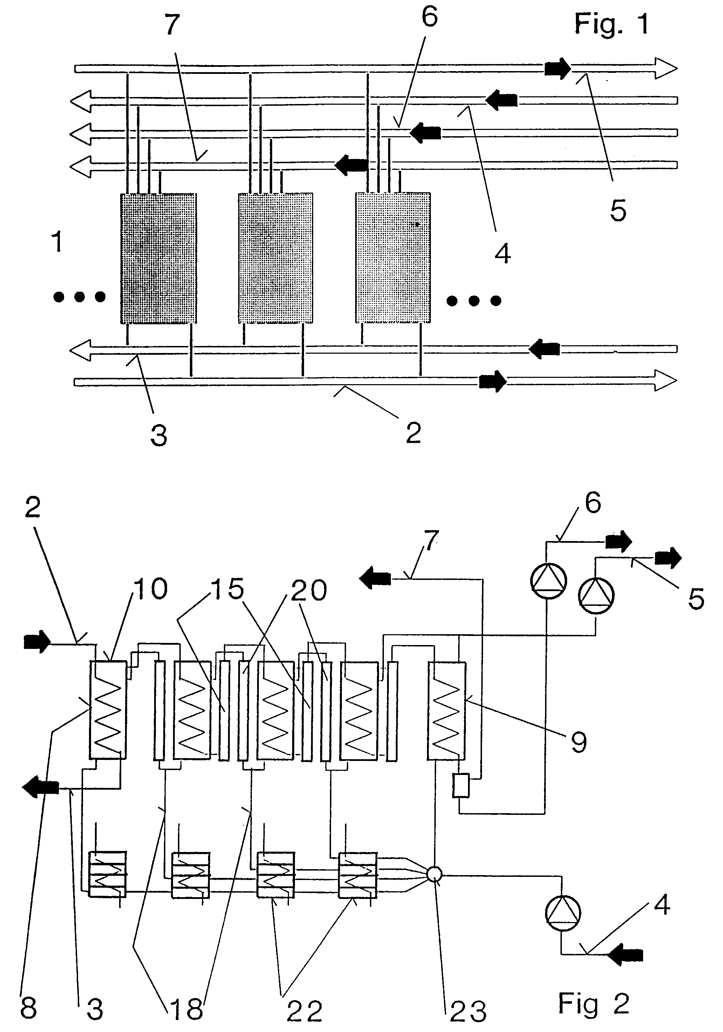

Das erfindungsgemässe Verfahren verlegt den mehrfachen Destillations-Prozess in den Plattenwärmetauscher. Diese sind einfach in der Herstellung und in der Montage und entsprechend preiswert. Die Plattenwärmetauscher-Einheiten sind reihenweise an ein Rohrsystem angeschlossen (Figur 1).

Insbesondere wird den Plattenwärmetauscher-Einheiten Frischdampf 2 und Meerwasser 4 zugeführt und von ihnen Kondensat 3, Reinwasser als Produkt 6 und das überflüssige, etwas aufkonzentrierte Meerwasser 5 abgeführt. Zusätzlich sind die Einheiten mit einem Vakuum-System 7 verbunden.

Figur 2 zeigt die zwischen einem Verdampfer/Vorwärmer 8 und einem Kondensator 9 angeordneten Effekten 10, in welchen sich wiederholt die Verdampfungs- und Kondensationsvorgänge abspielen und auch das Vorwärmen des Meerwassers erfolgt.

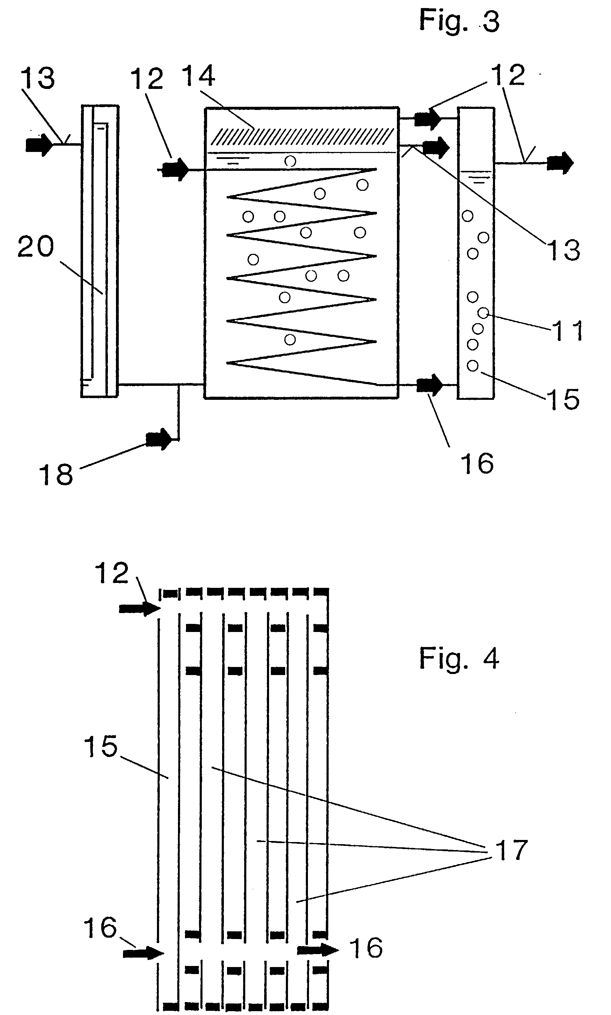

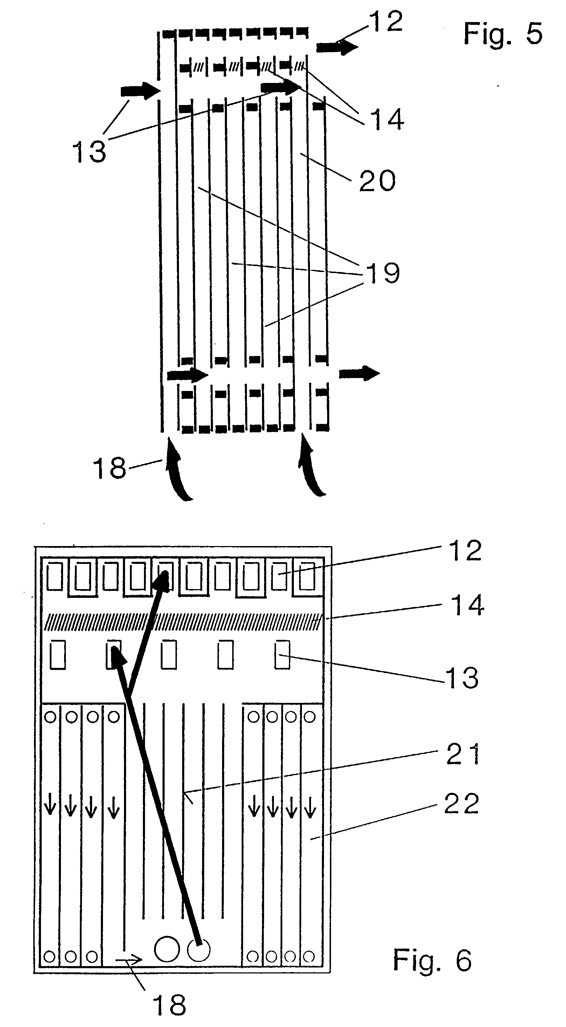

Der im vorhergehenden Effekt erzeugte Dampf 12 (Figur 3) kondensiert an der Kondensationsseite und verdampft einen Teil des vorgewärmten Meerwassers 11 an der Verdampferseite. Das nicht verdampfte, etwas eingedickte Meerwasser 13 wird zum nächsten Effekt zusammen mit vorgewärmter Meerwasser 18 geführt. Der im Verdampfer erzeugte Dampf wird zunächst durch einen Tropfenabscheider 14 geführt, bevor er zur Kondensationsseite des nächsten Effektes geleitet wird.

Der Wärmeübergang in den einzelnen Effekten findet nur dann statt, wenn eine hinreichende Temperaturdifferenz vorhanden ist. Der benötigten Temperaturdifferenz entspricht eine Differenz des Sättigungsdruckes. Diese Druckdifferenz zwischen den Effekten wird durch hydrostatische Wassersäulen auf speziellen Druckabfall-Platten 15 und 20 erzeugt.

Die nicht kondensierbaren Gase 11, welche durch das Ausdampfen ebenfalls im Verdampfer 19 entstehen, verlassen den Kondensator 17 zusammen mit dem Produkt 16 und gelangen über die Druckabfall-Platten 15 zum Kondensator-Teil des nächsten Effektes.

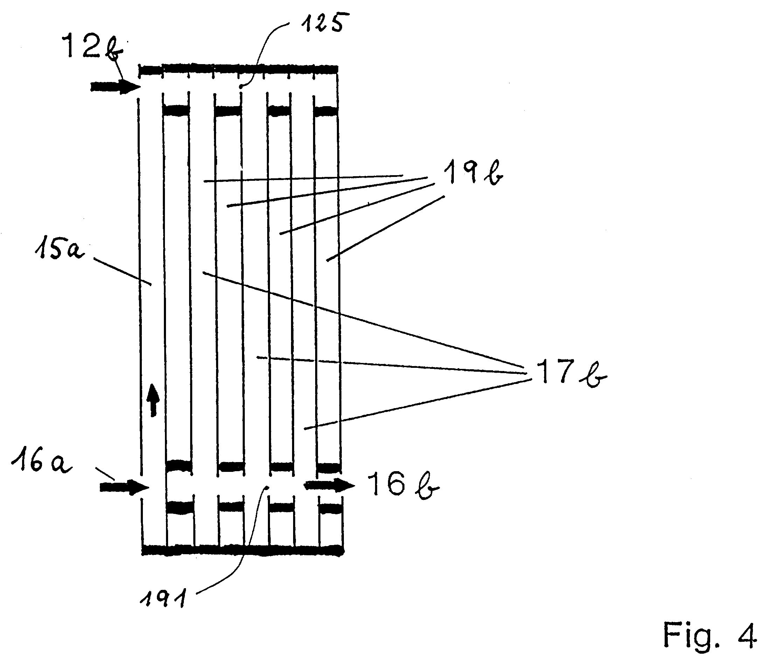

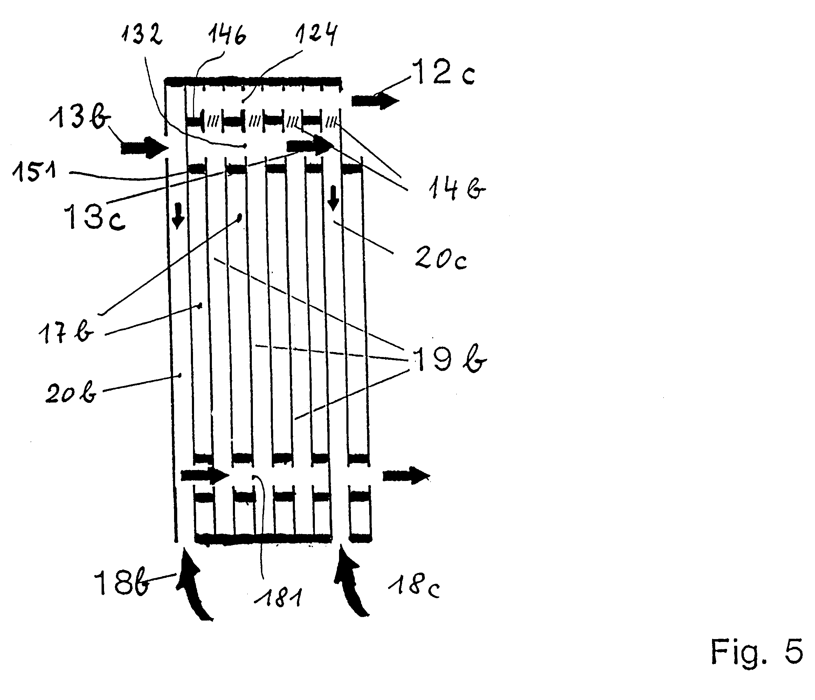

Figur 4 zeigt, dass Dampf 12 und Produkt 16 (Reinwasser) vom vorhergehenden Effekt zugeführt werden. Der Dampf kondensiert an der Kondensationsseite 17. Das Kondensat 16 wird durch die Wassersäule der Druckabfall-Platte 15 zum nächsten Effekt geführt, wobei die nötige Druckdifferenz durch den hydrostatischen Druck der Wassersäule entsteht. Figur 5 zeigt, dass Zuspeisung 18 und nicht verdampftes Meerwasser 13 der Verdampferseite 19 zugeführt werden. Das nicht verdampfte Meerwasser 13 fliesst über die Druckabfall-Platte 20 zum Eintritt des nächsten Effektes, wo es wieder mit der vorgewärmten Zuspeisung 18 vermischt wird.

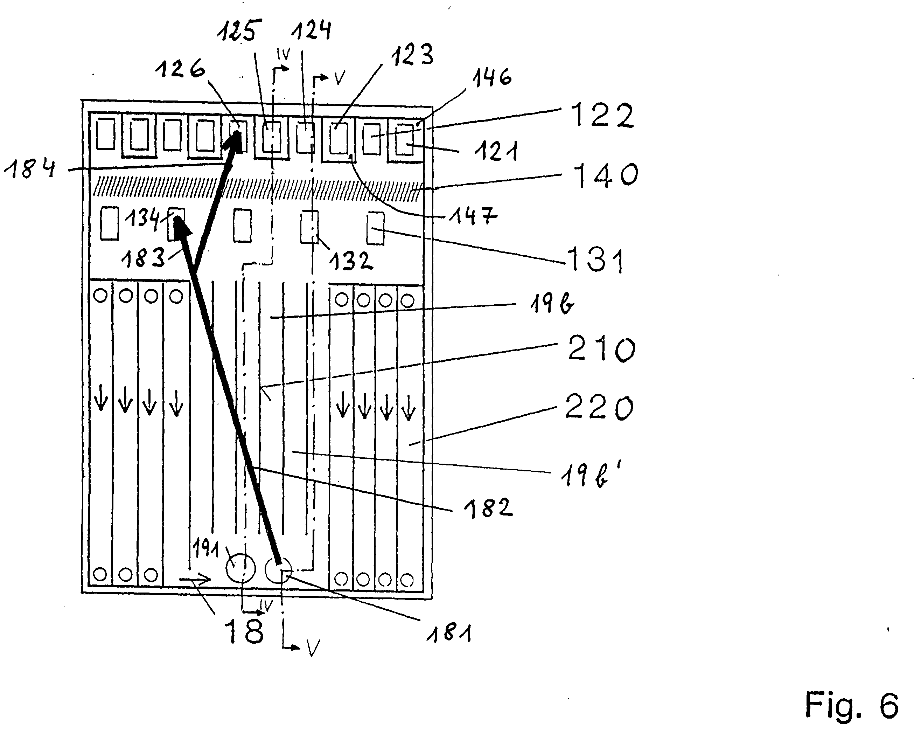

Die Vorwärmung (Figuren 2 und 6) erfolgt an einem für die Vorwärmung reservierten Teil 22 der Verdampfer-Platten, beheizt vom kondensierenden Dampf der Kondensationsseite 17. Das Meerwasser 4 wird in einem Unterteiler 23 auf einzelne Speisewasserströme 18 und auf den Kühlwasserstrom des Kondensators 9 unterteilt. Die Speisewasserströme 18 durchfliessen in parallelen Kanälen den Vorwärmer 22. Auf diese Weise erfolgt die Vorwärmung im Gegenstrom mit kleinen Temperaturdifferenzen, wobei die Temperatur des den Effekten zugeführten Meerwassers immer gerade den richtigen Wert hat.

Die Verdampfung findet in vertikalen, engen Kanälen (Figur 6) statt. Die Strömung in den einzelnen Kanälen ist intermittierend, die Kanäle arbeiten abwechslungsweise. Die Unterteilung in eine relativ grosse Anzahl Kanäle 21 bewirkt die Stabilität des Gesamtdurchflusses. Da der Querschnitt des Verdampfers relativ zum Querschnitt der Überleitung zum nächsten Effekt relativ gross ist, wird das Meerwasser im Verdampfer rezirkuliert, indem es durch die gerade nicht aktiven Kanäle zum Verdampfer-Eintritt zurückfliesst.

Die erfindungsgemässe Einrichtung funktioniert folgendermassen:

Aus dem unreinen Wasser wird zunächst erzeugt, und durch Kondensation des Dampfes entsteht das reine Wasser, wobei die Kondensationswärme des sich niederschlagenden Dampfes für die Erzeugung von weiterem Dampf verwendet wird. Die Wiederverwendung der Kondensationswärme wird mehrfach wiederholt, wobei der Wärmeaustausch zwischen der Kondensationsseite und der Verdampferseite im Plattenwärmeaustauscher stattfindet, wo mehrere Platten zu Effekten zusammengefasst sind, in welchen an der Kondensationsseite überall der Kondensationsdruck und an der Verdampfungsseite überall der Verdampfungsdruck herrschen, wobei mehrere Effekten eine Platten-Wärmetauscher-Einheit bilden und wobei die für die Wärmeübertragung notwendige Temperaturdifferenz durch den hydrostatischen Druckabfall zwischen den Effekten, das heisst durch die Höhe der Wassersäule in Druckabfall-Platten des Platten-Wärmetauschers, erzeugt wird.

Die Platten des Plattenwärmetauschers sind vertikal angeordnet, und der Druckabfall zwischen den Effekten entsteht in zusätzlichen Kanälen zwischen den Platten des Plattenwärmetauschers, wobei die Höhe der Platten in mehreren parallelen Kanälen mehrfach genützt wird, so dass der Gesamtdruckabfall als Summe aller Wassersäulen gegeben ist.

Die Zwischenräume zwischen den Platten des Wärmrtauschers sind verdampferseitig in mehrere vertikale Kanäle unterteilt, so dass der Gesamtdurchfluss des Verdampfers durch diese Unterteilung im Mittel stabilisiert wird.

Der an der Verdampferseite entstehende Dampf wird durch eine sich zwischen den Platten des Plattenwärmetauschers befindende tropfenabscheidende Strecke geführt, bevor er an die Kondensationsseite des nachfolgenden Effektes überführt wird.

Vorzugsweise wird die tropfenabscheidende Wirkung durch zwischen den Platten des Plattenwärmetauschers eingeklemmte Späne erzeugt.

Bei einer aus mehreren Effekten bestehenden Plattenwärmetauscher-Einheit erfolgen an der Hochtemperaturseite die Heizung von aussen und die Kondensation im letzten Effekt an der Niedertemperaturseite durch Kühlung von aussen.

Vorzugsweise bewirkt der kondensierende Dampf in den Effekten eine Vorwärmung der zu reinigenden im Gegenstrom geführten Ausgangslösung.

Vorzugsweise erfolgt die Speisung der einzelnen Effekten mit unreiner Ausgangslösung über individuelle Kanäle, die parallel verlaufen.

Vorzugsweise erfolgt das Vorwärmen in getrennten Kanälen eines Vorwärmer/Verdampfer-Abschnitts, wobei der Druckabfall zur Anpassung des Druckes der Speisung an die örtlichen Druckverhältnisse in den einzelnen Effekten durch Strömungs-Druckabfall in den Vorwärmerkanälen erfolgt.

Die Einrichtung kann mehrere Einheiten aufweisen, die reihenweise an Versorgungs- und Entsorgungsleitungen angeschlossen sind, so dass die Frischdampfzufuhr zum Vorwärmer/Verdampferteil an der Hochtemperaturseite, die Rückführung des Kondensats, die Kühlwasserzufuhr an der Niedertemperaturseite, die Abführung des produzierten Reinwassers, die Abführung des Überschusswassers und die Vakuumversorgung durch dieses Leitungssystem erfolgen.

Über eine grössere Fläche ausgedehnt verteilte Plattenwärmetauscher-Einheiten können mit Sonnenenergie-Kollektoren versehen sein.

Der Energiebedarf der Anlage kann abwechslungsweise durch Sonnenenergie oder durch Abwärme aus einem normalerweise anderen Zwecken dienenden thermischen Prozess gedeckt werden.

## Patentansprüche

1. Einrichtung zur Gewinnung von reinem Wasser, insbesondere aus Meerwasser, durch mehrfache Destillation mit Plattenwärmetauscher-Einheiten,
a) wobei die Einrichtung Effekte (10) aufweist, die zwischen einem Verdampfer/Vorwärmer (8) und einem Kondensator (9) angeordnet sind,
b) wobei die Effekte vertikale Wärmetauscherplatten umfassen, die eine Kondensationsseite und eine Verdampferseite aufweisen, um an der Kondensationsseite Dampf (12) zu kondensieren, der in einem vorhergehenden Effekt erzeugt wurde, und um an der Verdampferseite vorgewärmtes unreines Wasser zu verdampfen und diesen Dampf zur Kondensationsseite des nächsten Effektes zu führen,
dadurch gekennzeichnet,
c) dass Druckabfall-Platten (15, 20) vorhanden sind, die durch hydrostatische Wassersäulen eine Druckdifferenz zwischen den Effekten erzeugen, um eine Temperaturdifferenz
zwischen den Effekten zu haben, die einer Differenz des Sättigungsdruckes entspricht,
d) dass die Druckabfall-Platten zusätzliche Kanäle zwischen den Platten des Plattenwärmetauschers aufweisen,
e) dass die Druckabfall-Platten (15, 20) derart angeordnet sind,
e1) dass das nicht verdampfte unreine Wasser (13) eines Effektes über eine Wassersäule (20) der Druckabfall-Platten (15, 20) dem Eintritt des nächsten Effekts, mit vorgewärmter unreiner Zuspeisung (18) vermischt, zugeführt wird, und
dass, das Kondensat (16) der Kondensationsseite (17) eines Effekts durch eine weitere Wassersäule (15) der Druckabfall-Platten (15, 20) zum Kondensator-Teil des nächsten Effekts geführt wird,
und/oder
e2) dass Platten vorhanden sind, deren Höhe in mehreren parallelen Kanälen mehrfach genützt wird, um einen Gesamtdruckabfall als Summe all ihrer Wassersäulen zu erhalten.

2. Einrichtung nach Anspruch 1, dadurch gekennzeichnet, dass innerhalb der Effekte der gleiche Druck herrscht, indem der Druck der Kondensationsseite eines jeden Effektes dem Druck am Austritt an der Verdampfungsseite des benachbarten bei höherer Temperatur betriebenen Effektes entspricht.

3. Einrichtung nach Anspruch 1 oder 2, dadurch gekennzeichnet, dass die Zwischenräume zwischen den Platten verdampferseitig in mehrere vertikale Kanäle unterteilt sind, um den Gesamtdurchfluss des Verdampfers durch diese Unterteilung im Mittel zu stabilisieren.

4. Einrichtung nach einem der Ansprüche 1 bis 3, dadurch gekennzeichnet, dass der an der Verdampferseite entstehende vom Wasseranteil getrennte Dampf durch eine sich zwischen den Platten des Plattenwärmetauschers befindende tropfenabscheidende Strecke geführt wird, bevor es an die Kondensationsseite des nachfolgenden Effektes gelangt.

5. Einrichtung nach Anspruch 4, dadurch gekennzeichnet, dass die tropfenabscheidende Wirkung durch zwischen den Platten des Plattenwärmetauschers eingeklemmte Späne erzeugt wird.

6. Einrichtung nach einem der Ansprüche 1 bis 5, dadurch gekennzeichnet, dass die Verdampfung in einem Verdampfer/Vorwärmer (8) an der Hochtemperaturseite durch Heizung (2) von aussen und die Kondensation im letzten Effekt (9) an der Niedertemperaturseite durch Kühlung von aussen erfolgt.

7. Einrichtung nach einem der Ansprüche 1 bis 6, dadurch gekennzeichnet, dass der kondensierende Dampf in den Effekten im Gegenstrom die zu reinigende Ausgangslösung vorwärmt.

8. Einrichtung nach Anspruch 7, dadurch gekennzeichnet, dass die Speisung der einzelnen Effekte mit unreiner Ausgangslösung durch individuelle Kanäle erfolgt, welche parallel verlaufen.

9. Einrichtung nach Anspruch 8, dadurch gekennzeichnet, dass das Vorwärmen in getrennten Kanälen von Vorwärmer/Verdampfer-Abschnitten erfolgt, wobei der Druckabfall zur Anpassung des Druckes der Speisung an die örtlichen Druckverhältnisse in den einzelnen Effekten durch Strömungs-Druckabfall in den Vorwärmekanälen erfolgt.

10. Anlage mit Einrichtungen nach Anspruch 6, dadurch gekennzeichnet, dass die Einrichtungen reihenweise an Versorgungs- und an Entsorgungsleitungen angeschlossen sind, so dass der Frischdampfzufuhr zum Vorwärmer/Verdampferteil an der Hochtemperaturseite, die Rückführung des Kondensates und die Kühlwasserzufuhr an der Niedertemperaturseite, die Abführung des produzierten Reinwassers, die Abführung des Überschusswassers an Ausgangslösung und die Vakuumversorgung durch diese Versorgungs- und Entsorgungsleitungen erfolgen.

11. Anlage nach Anspruch 10, dadurch gekennzeichnet, dass die über eine grössere Fläche ausgedehnt verteilten Plattewärmeaustauscher-Einheiten von zu jeder Einheit zugeordneten Sonnenenergie-Kollektoren mit Energie versorgt werden.

12. Anlage nach Anspruch 11, dadurch gekennzeichnet, dass der Energiebedarf der Anlage je nach Verfügbarkeit abwechslungsweise durch Sonnenenergie bzw. Abwärme aus einem normalerweise anderen Zwecken dienenden thermischen Prozess gedeckt wird.

## Claims

1. Device for extracting pure water, especially from sea water, by multiple distillation using plate heat exchanger units,
a) in which the device comprises a number of distillation elements (10) arranged between an evaporator/pre-heater (8) and a condenser (9),
b) wherein said elements comprise vertical heat exchanger plates having a condensation side and an evaporation side, so that steam (12) is condensed on the condensation side after being generated in a previous element and preheated untreated water is evaporated on the evaporation side and this steam is then conveyed to the condensation side of the next element,
characterised in that
c) pressure reduction plates (15, 20) are provided, which by means of hydrostatic water columns create a pressure difference between the elements thus producing a temperature difference between elements corresponding to a difference in the saturated vapour pressure,
d) these pressure reduction plates have additional channels between the plates of the plate heat exchanger,
e) the pressure reduction plates (1 5, 20) are arranged in such a way
e1) that any untreated water (13) that has not been evaporated at one element is mixed with pre-heated untreated feedwater (18) and conveyed through a water column (20) in the pressure reduction plates (15, 20) to the entry of the next element, and
that the condensate (16) of the condensation side (17) of an element is passed through a further water column (15) in the pressure reduction plates (15, 20) to the condenser part of the next element,
and/or
c2) that plates are provided, the height of which is used repeatedly in a number of parallel channels in order to produce an overall pressure drop representing the sum of all their water columns.

2. Device according to Claim 1, characterised in that the same pressure prevails within the elements with the pressure level at the condensation side of each element corresponding to the pressure at the exit on the evaporation side of the next element which is operated at a higher temperature.

3. Device according to Claim 1 or 2, characterised in that the spaces between the plates are subdivided on the evaporation side into a number of vertical channels in order to average out the total flow of the evaporator across these subdivisions

4. Device according to any of the Claims 1 to 3, characterised in that the steam generated at the evaporation side and separated from the water content is conveyed through a droplet collection section that is located between the plates of the plate heat exchanger before it arrives at the condensation side of the next element.

5. Device according to Claim 4, characterised m that the droplet collection effect is achieved with shavings wedged between the plates of the plate heat exchanger.

6. Device according to any of the Claims 1 to 5, characterised in that the evaporation process takes place in an evaporator/pre-heater (8) at the high temperature side by means of external heat (2) and the condensation process in the last element (9) at the low temperature side takes place by external cooling.

7. Device according to any of the Claims 1 to 6, characterised in that the condensing steam in the elements pre-heats in a counter-current the starting solution to be treated.

8. Device according to Claim 7, characterised in that the feeding of the individual elements with the untreated starting solution is effected by means of individual channels running in parallel.

9. Device according to Claim 8, characterised in that the pre-heating process takes place in separate channels of the pre-heater/evaporator sections, with the pressure reduction to balance the feed pressure with the local pressure conditions in the individual elements being achieved by a reduction in flow pressure in the pre-heating channels.

10. Installation with devices according to Claim 6, characterised in that the said devices are connected in sequence to supply and discharge lines, such that the flow of fresh steam to the preheater/evaporator unit takes place on the high temperature side, the return flow of the condensate and the cooling water supply take place on the low temperature side and the removal of the purified water produced, the transfer of the excess water to the starting solution and the provision of a vacuum take place through these supply and discharge lines.

11. Installation according to Claim 10, characterised in that the plate heat exchanger units are spread out over a large area and are supplied with energy by solar energy collectors assigned to each of the units.

12. Installation according to Claim 11, characterised in that the energy requirement of the installation is provided alternately by solar energy and/or the waste heat from a thermal process normally used for other purposes, depending on availability.

## Revendications

1. Dispositif pour l'obtention d'eau pure, notamment à partir d'eau de mer, par distillation multiple avec des unités d'échangeur thermique à plaques :
a) dans lequel le dispositif comporte des éléments (10) qui sont disposés entre un système d'évaporation-préchauffage (8) et un condenseur (9) ;
b) dans lequel les éléments sont formés de plaques d'échangeur de chaleur verticales qui comportent une zone de condensation et une zone d'évaporation de façon à ce que, dans la zone de condensation de la vapeur (12) soit condensée, laquelle vapeur a été obtenue dans un élément précédent et de façon que, dans la zone d'évaporation ou de vaporisation, de l'eau impure préchauffée soit vaporisée et que cette vapeur soit utilisée dans l'élément suivant dans la zone de condensation;
caractérisé en ce que :
c) il comporte des plaques de chute de pression (15, 20) qui, grâce à la présence de colonnes d'eau hydrostatiques créent une différence de pression entre les éléments pour obtenir une différence de température entre les éléments qui correspond à une différence de la pression de saturation ;
d) les plaques de chute de pression comportent des canaux supplémentaires disposés entre les plaques de l'échangeur de chaleur à plaques ;
e) les plaques de chute de pression (15, 20) sont disposées de telle façon:
e1) que l'eau impure non vaporisée (13) provenant d'un élément soit amenée par l'intermédiaire d'une colonne d'eau (20) des plaques de chute de pression (15, 20) à l'entrée de l'élément suivant, mélangée à une alimentation (18) d'eau impure préchauffée et que le condensat (16) de la zone de condensation (17) d'un élément soit amené par l'intermédiaire d'une autre colonne d'eau (15) des plaques de chute de pression (15, 20) à la zone de condensation de l'élément suivant,
et/ou
e2) en ce qu'il comporte des plaques dont la hauteur dans différents canaux parallèles est utilisée à plusieurs reprises pour que la chute de pression totale corresponde à la somme de toutes les colonnes d'eau des plaques.

2. Dispositif selon la revendication 1, caractérisé en ce que, à l'intérieur des éléments règne la même pression, de façon que la pression de la zone de condensation de chacun des éléments corresponde à la pression à la sortie de la zone d'évaporation de l'élément adjacent opérant à température supérieure.

3. Dispositif selon la revendication 1 ou 2, caractérisé en ce que la zone intermédiaire entre les plaques du côté vapeur est subdivisée en plusieurs canaux verticaux pour, grâce à cette subdivision, stabiliser en valeur moyenne le flux total de l'évaporateur.

4. Dispositif selon l'une quelconque des revendications 1 à 3, caractérisé en ce que la vapeur séparée de la partie aqueuse formée dans la zone d'évaporation est amenée dans une zone de séparation de gouttes disposée entre les plaques de l'échangeur de chaleur à plaques, avant qu'elle ne parvienne à la zone de condensation de l'élément suivant.

5. Dispositif selon la revendication 4, caractérisé en ce que l'action de séparation des gouttes est produite par des copeaux (chicanes) disposés entre les plaques de l'échangeur de chaleur.

6. Dispositif selon l'une quelconque des revendications 1 à 5, caractérisé en ce que la vaporisation se produit dans un évaporateur préchauffeur (8) dans la zone de température élevée par chauffage externe (2) et en ce que la condensation se produit dans le dernier élément (9) dans la zone de température basse par refroidissement externe.

7. Dispositif selon l'une quelconque des revendications 1 à 6, caractérisé en ce que, dans les éléments, la vapeur à condenser préchauffe à contre-courant la solution de départ à traiter.

8. Dispositif selon la revendication 7. caractérisé en ce que l'alimentation des différents éléments est réalisée par amenée de solution de départ impure au travers de divers canaux individuels disposés parallèlement entre eux.

9. Dispositif selon la revendication 8, caractérisé en ce que le préchauffage se produit dans divers canaux distincts des sections de préchauffage/évaporation et en ce que la chute de pression pour adapter la pression de l'alimentation à la pression locale de chacun des éléments individuels est réalisée par chute de pression du flux de circulation dans les canaux de préchauffage.

10. Installation comportant des dispositifs selon la revendication 6, caractérisé en ce que les dispositifs sont raccordés les uns derrière les autres à des conduites d'alimentation et d'évacuation de sorte que l'alimentation en vapeur fraîche destinée à la partie préchauffeur/évaporateur de la zone à haute température, le reflux du condensat et la fourniture d'eau froide dans la zone à température basse, l'évacuation de l'eau pure produite, l'évacuation de l'eau excédentaire à la solution de départ et l'application sous vide soient produits par l'intermédiaire de ces conduites d'alimentation et d'évacuation.

11. Installation selon la revendication 10, caractérisée en ce que les unités d'échangeurs de chaleur à plaques disposées sur de très grandes surfaces, sont alimentées en énergie par des collecteurs d'énergie solaire associés à chaque unité.

12. Installation selon la revendication 11, caractérisé en ce que ses besoins en énergie sont couverts, selon les disponibilités, soit par apport d'énergie solaire, soit respectivement par fourniture de chaleurs perdues provenant d'un processus thermique servant normalement à d'autres fins.
